# EUROPÄISCHE PATENTSCHRIFT

(11) **EP 0 291 831 B1**
(45) Veröffentlichungstag und Bekanntmachung des Hinweises auf die Patenterteilung: **01.09.1993**
(21) Anmeldenummer: 88107545.1
(22) Anmeldetag: 11.05.1988
(51) Int. Cl.: B65D 90/66

(54) **Knaggenverriegelung**
Blocking device for key bolts
Dispositif pour bloquer des pênes

(30) Priorität: 17.05.1987 DE 8707100 U
(43) Veröffentlichungstag der Anmeldung: 23.11.1988
(73) Patentinhaber: UTEF - MABO, UTEF Umwelt-Technik Entsorgungs-Fahrzeuge Ges. für Entw. Konstruktionen und Patentverwertung mbH & Co, MABO KG, D-59302 Oelde (DE)
(72) Erfinder: Thüner, Udo Th., D-4740 Oelde 1 (DE)
(74) Vertreter: Strauss, Hans-Jochen, Dipl.-Phys., Dr.

(56) Entgegenhaltungen:
- EP-A- 0 214 493
- DE-A- 2 209 111
- FR-A- 1 307 388
- US-A- 3 113 352
- US-A- 3 924 780

## Beschreibung

Die Erfindung betrifft eine Knaggenverriegelung für mit einem öffenbaren Deckel versehenen Behälter, wobei der öffenbare Deckel mindestens mit einem Angriffsnocken für die Verriegelung versehen ist, und wobei die Knaggenverriegelung ein mit dem festen Behälterteil verbundenes Riegellager aufweist, an das eine von einer Kraftquelle antreibbare Gelenkscheibe und eine mit einer Riegelnase versehene Riegelscheibe angelenkt sind, die über ein an beide Scheiben angelenktes starres Schubglied miteinander verbunden sind.

Knaggenverschlüsse werden zum Verschließen von Öffnungen mit Deckeln benutzt, wobei mehrere Knaggenverschlüsse im wesentlichen gleichmäßig am Umfang der Öffnung verteilt mit ihrem Verriegelungsgliedern den Deckel in den Dichtsitz der Öffnung pressen. Dazu weist der Dekkel Angriffsnocken auf, die oftmals als umlaufender Flansch ausgebildet sind. Derartige einfache Knaggenverschlüsse beschreiben z.B. die DE-A-22 09 111 oder die US-A-3 924 780. In einer Weiterbildung sind die Knaggenverschlüsse selbst als "Übertotpunkt-Verschlüsse" ausgebildet, bei denen im festgesetzten Zustand kein selbsttätiges Lösen des Verschlusses mehr möglich ist, sondern das Lösen allein durch eine von außen angreifende Kraft bewirkt wird. Derartige Verschlüsse -wie z.B. in FR-A-1 307 288 oder in der EP-A-0214493 beschrieben- bestehen aus einer Gelenkscheibe, an der die äußere Kraft zum Lösen und zum Verriegeln angreift, und einer Riegelscheibe, deren Riegelnase mit dem Angriffsnocken bzw. dem den Angriffsnocken bildenden Flansch zusammenwirkt, wobei beide an einem am festen Behälterteil verankerten Riegellager schwenkbar befestigt sind. Ein beide Scheiben verbindendes Schubglied bewirkt die Kraftübertragung von der Gelenkscheibe zur Riegelscheibe, wobei die geometrische Anordnung so ist, daß im verriegelten Zustand der Drehpunkt der gelenkscheibenseitigen Anlenkung des Schubgliedes in einem geringen Abstand von der Verbindungslinie der Drehpunkte der Anlenkungen von Gelenkscheibe und Riegelscheibe zum Riegellager hin verschoben ist.

Um derartige Knaggenverschlüsse auf diese selbstsichere Stellung einstellen zu können, schlägt die US-A-3 924 780 vor, daß die Riegelnase durch eine Schraube in Richtung der beim Anpressen wirkenden Kraft verstellbar ist. Dieses Verschrauben der Riegelnase selbst bedingt, daß bei jedem Lösen des Verschlusses eine Lose entsteht, und mit dieser Lose die Gefahr einer Verstellung der Riegelnase gegeben ist, so daß bei einem erneuten Schließen icht mehr sichergestellt ist, daß die Dichtheit gegeben ist. Um bei unterschiedlichen Dichtungen den Abstand von Behälterrand und Deckel sauber einstellen und sicher halten zu können, wurde auch schon das Schubglied als Schraubglied ausgebildet, so daß die genaue Länge des Schubgliedes durch Verschrauben eingestellt werden kann. Eine derartige Ausbildung mit massiven Schrauben, gegenläufigen Gewinden und entsprechenden Muttern ist nicht nur aufwendig, sie setzt auch sehr viel Platz voraus und ist trotz Einsatz von Kronenmuttern nicht notwendig starr, so daß die Einstellbarkeit der "Über-Totpunkt-Lage" tatsächlich unsicher ist und der Knaggenverschluß nach einem Öffnen nicht wieder mit Sicherheit in die selbsttätige gesperrte Stellung überführt werden kann, ohne die Position der mittels der Verschraubung einstellbaren Riegelnase zu überprüfen.

Hier setzt die Erfindung ein, der die Aufgabe zugrunde liegt, einen gattungsgemäßen Knaggenverschluß so weiterzubilden, daß die Nachteile der Schraubeinstellung vermieden werden und der Knaggenverschluß einfach und wirtschaftlich herstellbar und im Betrieb sicher einsetzbar ist.

Diese Aufgabe wird nun nach der Erfindung durch die im Kennzeichen des Haupanspruchs angegebenen Merkmale gelöst; vorteilhaft Weiterbildungen und bevorzugte Ausführungsformen beschreiben die Unteransprüche 2 bis 10.

Durch das als Profilstab fixer Länge ausgebildete Schubglied und durch die in Richtung der beim Schließen des Knaggenverschlusses wirkenden Kraft verlagerbar ausgebildeten Wirkflächen von Riegelnase und/oder Angriffsnocke, wobei zum Verlagern der Wirkflächen eine auf Riegelnase und/oder Angriffsnocken aufbringbare Beilage vorgesehen ist, ist ein Einstellen des Knaggenverschlusses gegeben, der völlig unabhängig von Schrauben oder Verschraubungen einstellbar ist, und der einmal eingestellt von seiner Natur her immer die für das selbsttätige Sperren des geschlossenen Knaggenverschlusses richtige Dicke aufweist. Durch diese Beilage ist eine sehr genaue Justierung der Lage der Wirkfläche möglich, so daß auch harte Dichtungen mit geringem Dichtungsweg ebenso einwandfrei auf Dichtheit eingestellt werden können, wie etwa Weichdichtungen mit großen Dichtungsweg. Darüber hinaus bietet die Anordnung den wesentlichen Vorteil, daß im Betrieb immer wieder auftretende Deformierungs- und Verschleißerscheinungen an den Wirkflächen von Angriffsnocken und/oder Riegelnase durch diese Beilagen korrigiert werden können. So ist im Zusammenwirken mit der Dichtung sichergestellt, daß trotz eines gewissen, in Richtung "Lösen" des Knaggenverschlusses liegenden Betrages nach Überschreiten des Totpunktes die notwendige Dichtheit gegeben ist. Dabei haben die Erfahrungen gezeigt, daß diese etwas "gemilderte" Dichtheit den Vorteil aufweist, daß der Aufbau eines unzulässig hohen Überdruckes im Behälter zu einem Abblasen über die Dichtung führt, wobei der Überdruck in gewissen Grenzen durch die Dicke der Beilage reproduzierbar einstellbar ist.

Die Beilage selbst kann aufsteckbar bzw. aufschraubbar ausgebildet werden. Beim Aufstecken ist es besonders bei umlaufenden Flanschen vorteilhaft, wenn eine Art "Nut-Feder-Verbindung" vorgesehen ist, die -um ein Abfallen der Beilage zu vermeiden- vorteilhaft schwalbenschwanzförmige, d.h. mit Hinterschneidungen versehen, ausgebildet wird. Es versteht sich von selbst, daß anstelle eines Schwalbenschwanzes auch eine T-Nut vorgesehen werden kann.

Um die Einstellung der Stärke der Beilage einfach vornehmen zu können, ist es vorteilhaft, die Beilage zumindest im Bereich der Wirkfläche mit mehreren abtrennbaren Schichten zu versehen. Derartige Materialien, als Unterlegmaterialien für Lager an sich bekannt, entstehen durch Walzen, wobei die einzelnen aufgewalzten Schichten durch Wahl eines geeigneten Walzdruckes gefügemäßig nicht miteinander verbunden sind. Es versteht sich von selbst, daß auch ein Nachbearbeiten der Wirkfläche zum Einstellen der Stärke der Beilage möglich ist.

Die Beilage selbst kann aus Kunststoff gefertigt sein, wobei es durch die Wahl der Größe der Wirkfläche möglich ist, den bei der Übertragung der zum Schließen notwendigen Kraft auftretenden Flächendruck im Bereich des für Kunststoffe Zumutbaren zu halten. Eine andere Möglichkeit ist durch die Verwendung von Stahl gegeben, bei dem die Oberfläche gehärtet ausgeführt sein kann, so daß im rauhen Betrieb Deformationen oder Verformungen unterdrückt werden können.

Durch die Wahl austauschbarer Beilagen ist es darüber hinaus möglich, den Verschluß an unterschiedliche Dichtungen anzupassen, da die Beilagen in einfacher Weise auswechselbar sind. Dieses Auswechseln erleichtert auch eine notwendige Reparatur, wenn doch eine Verformung an einem der Verschlußelemente aufgetreten ist. Besonders ist dies dann von Interesse, wenn ein Behälter im Dauereinsatz ist und nicht zu Reparaturzwecken außer Betrieb genommen werden soll. Das Lösen eines Knaggenverschlusses zum Auswechseln der Beilage ist im allgemeinen ohne Betriebsunterbrechung möglich. Besonders trifft dies für Behälter zu, die auf Entsorgungsfahrzeugen zur Aufnahme von flüssigen, schlammigen oder schüttfähigen Entsorgungsgütern vorgesehen sind, und die zur Reparatur in die Werkstatt zurückgerufen werden müssen. Ein entsprechender Vorrat von Beilagen ersetzt hier den Werkstattaufenthalt.

Es versteht sich von selbst, daß diese Knaggenverriegelung über den Umfang der Öffnung des Behälters gleichmäßig verteilt vorzusehen ist, um die Krafteinleitung gleichmäßig zu gestalten. Die zum Verriegeln und zum Lösen verwendeten Kraftquellen der Knaggenverschlüsse können dabei Hydraulikzylinder sein, die vorteilhaft zentral betätigt werden. Durch diese Betätigung wird ein gleichmäßiges Anpressen der Dichtung erreicht, so daß Deformationen oder Verschiebungen der Dichtung vermieden werden.

In einfacher Weise können blättchenförmige Beilagen, in einer Anzahl, die der benötigten Stärke entspricht, auf den Angriffsnocken bzw. den als Angriffsnocken wirkenden Flansch und/oder die Riegelnase aufgeschraubt werden. Wird die gesamte Höhe des Flansches benötigt, um die Anpreßkraft auf den Flansch zu übertragen, befinden sich die Anschraubstellen beidseits des Flansches. Das beidseitige Verschrauben sichert dabei auch die Positionierungg der an sich losen Beilagen. Durch diese Auflösung der Beilage in eine Anzahl "loser Beilage-Scheiben" läßt sich darüber hinaus die Vorratshaltung und der Austausch bzw. Ersatz zur Reparatur bzw. zur Anpassung z.B. bei einem Dichtungswechsel in einfacher Weise bewerkstelligen.

Durch die Beilagen wird es auch möglich, ein Schubglied fixer Länge vorzusehen, das vorteilhaft als Profilstab ausgebildet ist. Die an der Riegelnase und/oder dem Angriffsnocken vorgesehenen Beilagen erlauben den zum Abgleich des Sitzes notwendigen Höhenausgleich trotz fixer Länge des Schubgliedes. Dabei ist die Ausbildung des Schubgliedes als an beiden Enden die Gelenkscheibe bzw. die Riegelscheibe gabelförmig umfassendes Schubglied vorteilhaft, da dadurch das Spiel wesentlich verringert wird, wobei die Weite zwischen den die Gabel bildenden Flachprofilen die Stärke von Gelenkscheibe bzw. Riegelscheibe nur um das zur Bewegung notwendige Spiel überschreitet. Ungleiche Stärken von Riegelscheibe und Gelenkscheibe können dadurch überwunden werden, daß die Flachprofile eine Abkröpfung aufweisen; diese Abkröpfung kann sich im Bereich einer der Scheiben, aber auch zwischen ihnen befinden. Befindet sich die Abkröpfung zwischen den Scheiben, ist der den Abstand zwischen den Flachprofilen haltende Quersteg zweiteilig, entsprechend den Stärken der Gelenkscheibe und der Rielgelscheibe oder aber der Abkröpfung folgend ausgebildet. Dabei ergibt sich der Vorteil, daß die Riegelscheibe mit der Riegelnase in ihrer Stärke auch auf die notwendige Abmessung der Beilage abgestellt werden kann. Es versteht sich von selbst, daß dabei die führenden Teile der Flachprofile der Gabel im Bereich der Gelenkscheibe bzw. der Riegelscheibe eine für diesen Zweck hinreichende Verdeckungsfläche aufweisen sollen.
Das Wesen der Erfindung wird an Hand der beigefügten Figur beipsielhaft näher erläutert; diese Figur zeigt
eine geschnittene Seitansicht eines Behälters mit Deckel, wobei der Schnitt so gelegt ist, daß eine Knaggenverriegelung in Seitansicht zu sehen ist, sowie
eine herausgezogenen Einzelheit der Befestigung der Beilage durch Verschraubung.

Auf der Behälterwand 1 ist ein umlaufender, als U-Profil dargestellter Verstärkungsring 6 aufgeschweißt, der sich im Abstand vom Ende der Behälterwand 1 befindet. An diesem Ende ist der Endflansch 3 vorgesehen, der seinerseits mit einem Dichtring 5 gegenüber dem Flansch 4 des bewegbaren Deckels 2 abgedichtet wird. Dabei kann der Dichtring 5 auch in einer (nicht näher dargestellten) Nut angeordnet sein, durch die ein Verlieren beim Öffnen des Deckels unterbunden wird. Auf dem festen Behälterteil 1 ist das Riegellager 10 angeordnet, das mit dem Verstärkungsring 6 und mit dem behälterseitigen Endflansch 3 verschweißt ist. Das Riegellager 6 ist zweckmäßigerweise als Doppelplatte ausgebildet, wobei die Doppelplatte mit Bohrungen für die Bolzen zum Anlenken der Gelenkscheibe 11 und der Riegelscheibe 17 versehen ist. Darüber hinaus besitzt das Riegellager 10 ein Widerlager 10.1, das das gelenkscheibenseitige Ende des Schubstückes 14 aufnimmt.

Die Gelenkscheibe 11 ist mit einem Bolzen an dem Riegellager 10 befestigt und ist um die Achse 13 dieses Bolzens schwenkbar. Ist das Riegellager 10 aus zwei parallelen Platten gebildet, wird die Gelenkscheibe 11 zwischen diesen beiden Platten geführt. Die Gelenkscheibe 11 ist weiter mit der Bohrung 12 für den Kraftangriff zur Betätigung der Knaggenverriegelung versehen und mit einer weiteren Bohrung, durch die ein Bolzen zur Verbindung der Gelenkscheibe 11 mit dem Schubglied 14 geführt ist. Um diesen Bolzen sind relativ zueinander Gelenkscheibe 11 und Schubglied 14 schwenkbar, wobei die Schwenkachse 15 mit der Achse des Bolzens zusammenfällt.

Das Schubglied 14 überträgt Kraft von der Gelenkscheibe 11 auf die Riegelscheibe 17, die ihrerseits mit einem Bolzen an das Riegellager 10 angelenkt und um die Bolzenachse 18 schwenkbar ist. Die Verbindung zum Schubglied 14 erfolgt ebenfalls mit einem Bolzen, dessen Achse die Schwenkachse 16 bildet, um die Schubglied 14 und Riegelscheibe 17 gegeneinander verschwenkbar sind. Für die Verriegelung ist dabei wesentlich, daß die Verbindungslinie der Schwenkachsen 13 - Gelenkscheibe 11 um Riegellager 10 - und 16 - Riegelscheibe 17 relativ zu Schubglied 14 - gegenüber dem Riegellager 10 oberhalb der Schwenkachse 15 - Gelenkscheibe 11 relativ gegenüber Schubglied 14 - liegt und einen Abstand "x" aufweist. Dadurch ist eine "Übertodpunkt-Stellung" gegeben, aus der der Verschluß nur durch Anwendung einer äußeren Kraft gelöst werden kann. Die Übertodkopf-Stellung wird durch das Widerlager 10.1 am Riegellager stabil gehalten.

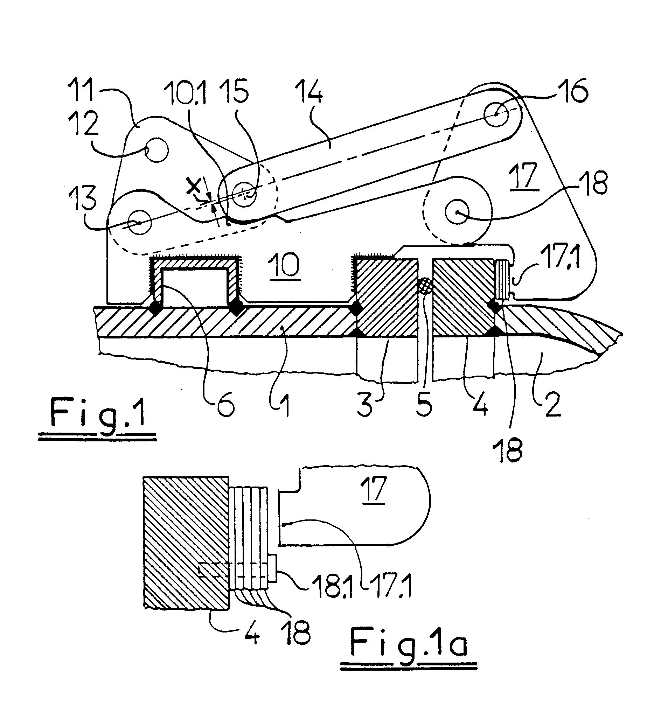

Die Riegelscheibe 17, die gegenüber dem Riegellager 10, um die Schwenkachse 18 und gegenüber dem Schubglied 14, und relativ zu diesem,um die Schwenkachse 16 drehbar ist, besitzt eine Verriegelungsnase 17.1, deren Vorderfläche auf den Flansch 4 (bzw. einen Verriegelungsnocken) des bewegten Deckels 2 drückt. Zur genauen Abstandsjustierung ist eine Beilage 18 vorgesehen, die entweder auf die Riegelnase 17.1 oder den Flansch 4 (bzw. den Verriegelungsnocken) aufgesetzt ist. Um ein Abfallen zu vermeiden, ist - gemäß der Einzelheit Fig. 1a - eine aus mehreren Scheiben geeigneter Dicke gebildete Beilage 18 mit einer Schraube 18.1 auf den Flansch 4 aufgeschraubt. Die Schraube 18.1 ist dabei außerhalb des Auflagebereichs der Riegelnase 17.1 der Riegelscheibe 17 angeordnet.

## Patentansprüche

1. Knaggenverriegelung für mit einem öffenbaren Deckel versehene Behälter, wobei der öffenbare Deckel (2) mindestens mit einem Angriffsnocken (4) für die Verriegelung versehen ist, und wobei die Knaggenverriegelung ein mit dem festen Behälterteil (1) verbundenes Riegellager (10) aufweist, an das eine von einer Kraftquelle antreibbare Gelenkscheibe (11) und eine mit einer Riegelnase (17.1) versehene Riegelscheibe (17) angelenkt sind, die über ein an beide Scheiben (11, 17) angelenktes starres Schubglied (14) miteinander verbunden sind, **dadurch gekennzeichnet,** daß das Schubglied (14) als Profilstab fixer Länge ausgebildet ist, und daß Wirkflächen von Riegelnase (17.1) und/oder Angriffsnocke (4) in Richtung der beim Schließen auftretenden Kraft verlagerbar ausgebildet sind, wobei zum Verlagern der Wirkflächen eine auf Riegelnase (17.1) und/oder Angriffsnocken (4) aufbringbare Beilage (18) vorgesehen ist.

2. Knaggenverriegelung nach Anspruch 1, **dadurch gekennzeichnet**, daß die Beilage (18) formschlüssig mit der Riegelnase (17.1) und/oder dem Angriffsnocken (4) verbindbar ist.

3. Knaggenverriegelung nach nach Anspruch 2, **dadurch gekennzeichnet**, daß die Beilage (18) und die Riegelnase (17.1) und/oder der Angriffsnocken (4) in Art einer Nut-/ Feder-Verbindung vorzugsweise schwalbensschwanzförmig ausgebildet sind und die Beilage in diese Verbindung einschiebbar ist.

4. Knaggenverriegelung nach Anspruch 1, **dadurch gekennzeichnet**, daß die Beilage auf die Riegelnase (17.1) und/oder den Angriffsnocken (4) aufschraubbar ist.

5. Knaggenverriegelung nach einem der Ansprüche 1 bis 4, **dadurch gekennzeichnet**, daß die Beilage (18) aus mehreren abtrennbaren Schichten gebildet ist.

6. Knaggenverriegelung nach einem der Ansprüche 1 bis 5, **dadurch gekennzeichnet**, daß die Beilage (18) aus einem Kunststoff geformt ist.

7. Knaggenverriegelung nach einem der Ansprüche 1 bis 5, **dadurch gekennzeichnet**, daß die Beilage (18) aus Stahl gefertigt ist, mit gehärteter Oberfläche zumindest im Bereich der Wirkfläche.

8. Knaggenverriegelung nach einem der Ansprüche 3 bis 7, **dadurch gekennzeichnet**, daß die aus Schichten gebildete Beilage (18) mit mindestens einer Schraube (18.1), die außerhalb der Wirkungsfläche der Riegelnase (17.1) angeordnet ist, auf den Flansch bzw. die Angriffsnocke (4) aufgeschraubt ist.

9. Knaggenverriegelung nach einem der Ansprüche 1 bis 8, **dadurch gekennzeichnet**, daß daß das Schubglied (14) aus zwei Flachprofilen gebildet ist, die im Bereich zwischen der Gelenkscheibe (11) und der Riegelscheibe (17) durch einen Quersteg miteinander verbunden sind, wobei der Abstand der freien Enden der Flachprofile des Schubgliedes (14) geringfügig größer ist, als die Dicke von Gelenkscheibe (11) bzw. Riegelscheibe (17).

10. Knaggenverriegelung nach Anspruch 9, **dadurch gekennzeichnet**, daß die Flachprofile des Schubgliedes (14) zwischen Gelenkscheibe (11) und Riegelscheibe (17) gegeneinander abgekröpft sind, und daß der beide Flachprofile miteinander verbindende Quersteg entsprechend der Abkröpfung zwei unterschiedliche Breiten aufweist.

## Claims

1. Dog-type lock for containers provided with an openable lid, the openable lid (2) being provided with at least one gripping cam (4) for locking, and the dog-type lock having a latch bearing (10) connected to the fixed container part (1), to which bearing a link disc (11) driven by a power source and a latch disc (17) provided with a latch nose (17.1) are joined, said latch disc (17) being interconnected via a rigid thrust member (14) joined to both discs (11, 17), characterized in that the thrust member (14) is formed as a profiled bar of fixed length and in that acting surfaces of the latch nose (17.1) and/or the gripping cam (4) are designed to move in the direction of the force occurring during closing, a shim (18) mountable on the latch nose (17.1) and/or gripping cam (4) being provided for moving the acting surfaces.

2. Dog-type lock as claimed in Claim 1, characterized in that the shim (18) is positively connectable to the latch nose (17.1) and/or the gripping cam (4).

3. Dog-type lock as claimed in Claim 2, characterized in that the shim (18) and the latch nose (17.1) and/or the gripping cam (4) are formed like a tongue and groove joint preferably of dovetail shape and the shim is insertable into this joint.

4. Dog-type lock as claimed in Claim 1, characterized in that the shim may be screwed to the latch nose (17.1) and/or the gripping cam (4).

5. Dog-type lock as claimed in any one of Claims 1 to 4, characterized in that the shim (18) is formed from several separable layers.

6. Dog-type lock as claimed in any one of Claims 1 to 5, characterized in that the shim (18) is formed from plastics.

7. Dog-type lock as claimed in any one of Claims 1 to 5, characterized in that the shim (18) is made of steel, with a hardened surface at least in the area of the acting surface.

8. Dog-type lock as claimed in any one of Claims 3 to 7, characterized in that the shim (18) formed from layers is screwed to the flange or the gripping cam (4) with at least one bolt (18.1) which is arranged outside the acting surface of the latch nose (17.1).

9. Dog-type lock as claimed in any one of Claims 1 to 8, characterized in that the thrust member (14) is formed from two flat sections which are connected to one another by a transverse web in the area between the link disc (11) and the latch disc (17), the distance between the two ends of the flat sections of the thrust member (14) being slightly greater that the thickness of the link disc (11) or the latch disc (17).

10. Dog-type lock as claimed in Claim 9, characterized in that the flat sections of the thrust member (14) are offset relative to each other between the link disc (11) and the latch disc (17), and in that the transverse web connecting both flat sections to one another have two different widths corresponding to the offset.

## Revendications

1. Dispositif pour bloquer les pênes destinés à des récipients munis d'un couvercle ouvrable, le couvercle ouvrable (2) étant au moins muni d'une came d'attaque (4) pour le blocage ou verrouillage et le dispositif pour bloquer ou verrouiller les pênes présentant un palier de verrou (10) relié à l'élément de récipient fixe (1), palier de verrou sur lequel sont montés en articulation un disque d'articulation (11) pouvant être entraîné par une source de force motrice et un disque de verrou (17) muni d'un bec de verrou (17.1), qui sont reliés entre eux par un élément de poussée (14) rigide raccordé de façon articulée aux deux disques (17, 11), caractérisé en ce que l'élément de poussée est conçu sous forme d'une barre profilée de longueur fixe et en ce que les faces actives du bec de verrou (17.1) et/ou de la came d'attaque (4) sont conçues de façon déplaçable en direction de la force se produisant lors de la fermeture, une cale (18) applicable sur le bec de verrou (17.1) et/ou sur la came d'attaque (4) étant prévue de façon à déplacer les faces actives.

2. Dispositif pour bloquer des pênes selon la revendication 1, caractérisé en ce que la cale (18) peut être raccordée par concordance de forme avec le bec de verrou (17.1) et/ou avec la came d'attaque (4).

3. Dispositif pour bloquer les pênes selon la revendication 2, caractérisé en ce que la cale (18) et le bec de verrou (17.1) et/ou la came d'attaque (4) sont conçus sous forme d'assemblage à fausse clavette, de préférence d'assemblage à queue d'aronde et la cale peut être insérée dans cet assemblage.

4. Dispositif pour bloquer les pênes selon la revendication 1, caractérisé en ce que la cale peut être vissée sur le bec de verrou (17.1) et/ou sur la came d'attaque (4).

5. Dispositif pour bloquer les pênes selon l'une des revendications 1 à 4, caractérisé en ce que la cale (18) est constituée de plusieurs couches séparables.

6. Dispositif pour bloquer les pênes selon l'une des revendications 1 à 5, caractérisé en ce que la cale (18) est réalisée en matière plastique.

7. Dispositif pour bloquer les pênes selon l'une des revendications 1 à 5, caractérisé en ce que la cale (18) est réalisée en acier avec une surface trempée au moins au niveau de la face active.

8. Dispositif pour bloquer les pênes selon l'une des revendications 3 à 7, caractérisé en ce que la cale (18) constituée de couches est montée par vissage sur la bride ou la came d'attaque (4) à l'aide d'au moins une vis (18.1) qui est disposée à l'extérieur de la face active du bec de verrou (17.1).

9. Dispositif pour bloquer les pênes selon l'une des revendications 1 à 8, caractérisé en ce que l'élément de poussée (14) est constitué par deux plats qui sont reliés dans la zone entre le disque d'articulation (11) et le disque de verrou (17) par une entretoise transversale, la distance entre les extrémités libres des plats de l'élément de poussée (14) étant légèrement inférieure à l'épaisseur du disque d'articulation (11) ou du disque de verrou (17).

10. Dispositif pour bloquer les pênes selon la revendication 9, caractérisé en ce que les plats de l'élément de poussée (14) sont coudés l'un par rapport à l'autre entre le disque d'articulation (11) et le disque de verrou (17) et en ce que l'entretoise transversale reliant entre eux les deux plats présente deux largeurs différentes correspondant à la configuration coudée.
